# EUROPEAN PATENT SPECIFICATION

(11) **EP 4 673 244 B1**
(45) Date of publication and mention of the grant of the patent: **18.11.2026**
(21) Application number: 24704262.5
(22) Date of filing: 09.02.2024
(51) Int. Cl.: B01D 29/13, B01D 29/23, B01D 35/02, H01M 8/04029, H01M 8/04044

(54) **SINGLE PIECE FILTERING ELEMENT FOR A FLUID RECIRCULATION SYSTEM FOR AN AIR CONDITIONING SYSTEM SUCH AS A SYSTEM FOR COOLING A BATTERY ASSEMBLY IN PARTICULAR FOR ELECTRIC VEHICLES**
EINSTÜCKIGES FILTERELEMENT FÜR EIN FLÜSSIGKEITSRÜCKFÜHRUNGSSYSTEM FÜR EINE KLIMAANLAGE WIE ETWA EIN SYSTEM ZUR KÜHLUNG EINER BATTERIEANORDNUNG INSBESONDERE FÜR ELEKTROFAHRZEUGE
ÉLÉMENT FILTRANT MONOBLOC POUR SYSTÈME DE RECIRCULATION DE FLUIDE POUR SYSTÈME DE CLIMATISATION TEL QU'UN SYSTÈME DE REFROIDISSEMENT D'UN ENSEMBLE BATTERIE NOTAMMENT POUR VÉHICULES ÉLECTRIQUES

(30) Priority: 27.02.2023 IT 202300003489
(43) Date of publication of application: 07.01.2026
(73) Proprietor: GVS S.p.A., 40069 Zola Predosa (Bologna) (IT)
(72) Inventor: SALVARANI, Enrico, 41012 Carpi (MO) (IT); DE AMICIS, Andrea, 40024 Castel San Pietro Terme (BO) (IT); TONIELLI, Claudio, 40133 Bologna (IT)
(74) Representative: Ripamonti, Enrico
(86) International application number: PCT/IB2024/051218
(87) International publication number: WO 2024/180406

(56) References cited:
- EP-A1- 4 098 345
- US-A- 4 052 315
- US-A1- 2003 201 222

## Description

Forming an object of the present invention is a filtering element adapted to be used in a fluid recirculation system used for the air conditioning, that is the heating or the cooling of one or more members subject to change of temperature during the operation or use thereof, such as electric batteries or accumulators according to the preamble of the main claim. Such preamble is reported in US2003/201222.

In particular, the invention relates to a system for cooling a battery assembly or pack used in the automotive industry that is for driving partial or full electric vehicles. In the present document, for the sake of simplicity, reference will be made to the use of the invention for cooling a battery assembly in a motor vehicle; such use is provided solely by way of non-limiting example.

In the present document, the expression "battery assembly" is used to indicate both a set of lithium batteries or of another type, and fuel cells. Given that both such types of batteries need to be cooled, a system that suitably cools them with an appropriate and known refrigerant is generally associated therewith.

In the cooling system there is present at least one filtering element which filters the impurities of particulates present in the circulating fluid, especially after the system has been filled with it**.**

There are known various types of filtering elements adapted to carry out the function mentioned above: therein, it is important to avoid that the aforementioned impurities mentioned above deposit on filtering surfaces of such elements so as to avoid the reduction of the passage section of the cooling fluid in the system and this could lead to dangerous consequences in the batteries.

In general, the known filtering elements comprise a body having a filtering portion and a stiff part connected to the portion; such body is usually inserted and held blocked in an outer casing whose ends (or at least one of them) are connected to ducts of the cooling system. Such end of the casing are shaped so as to be connected with such ducts or they are provided with fittings adapted to facilitate the constraint of the casing to the ducts mentioned above. Alternatively, only one end of the outer casing is connected to a duct of the cooling system. Another duct of the latter being directly connected to the stiff part of the body of the filtering element.

In order to create a section useful for the through-flow of the cooling fluid through the filtering element in the outer casing, the filtering portion of such element is preferably conical or however tapered along the longitudinal axis thereof towards a vacant end.

This type of filtering elements provided with an outer casing therefore needs the production of a plurality of components which must be assembled together before the insertion into the cooling system, as well as the use of possible sealing elements at the areas in which the filtering elements and the relative outer casings are coupled to the cooling system.

Furthermore, as it for example occurs for the filtering element described in US2020/0054973, a tapered terminal part (concave in this prior art document) of the filtering portion becomes an impurities accumulation site, and this is detrimental to the correct flow of the cooling fluid and to the filtering mode.

An object of the present invention is to provide a filtering element for a fluid recirculation system for air conditioning that is cooling or heating one or more members during the operation or use thereof.

In particular, an object of the invention is to provide a filtering element for a system for cooling a battery assembly, in particular for electric vehicles, which is improved with respect to the prior art filtering elements used in prior art cooling systems for battery assemblies for vehicles.

Another object of the present invention is to provide a filtering element of the type mentioned above that is quick and easy to couple with the air conditioning fluid recirculation system and which - at the same time - ensures the sealing and the normal flow of the cooling fluid in such system and through the filtering element.

Another object is to provide a filtering element of the type mentioned above in which the filtering surface thereof is maximised relating to the sizes of such element, while reducing any pressure drop in the cooling system.

A further object is to provide a filtering element in which the stagnation of the cooling fluid is minimised while - at the same time - optimising the filtration performance and the flows in the circuit.

These and other objects which shall be more apparent to the person skilled in the art are attained by a filtering element according to the attached independent claim and the subordinated claims.

For a better understanding of the present invention, the following drawings are attached hereto, purely by way of non-limiting example, wherein:
figure 1 shows a perspective view - from one side - of a filtering element according to the invention;
figure 2 shows a lateral view of the filtering element of figure 1;
figure 3 shows a cross-sectional view according to line 3-3 of figure 1;
figure 4 shows a perspective view of a first variant of the filtering element of figure 1;
figure 5 shows a view - from the left - of the filtering element of figure 4;
figure 6 shows a perspective view of a second variant of the filtering element of figure 1; and
figure 7 shows a cross-sectional view according to line 7-7 of figure 6;
figure 8 shows a perspective view of third variant of the filtering element of figure 1;
figure 9 shows a perspective front view of the variant of figure 8;
figure 10 shows a cross-sectional view according to line 10-10 of figure 8; and
figure 11 shows the section of figure 10 in plan view.

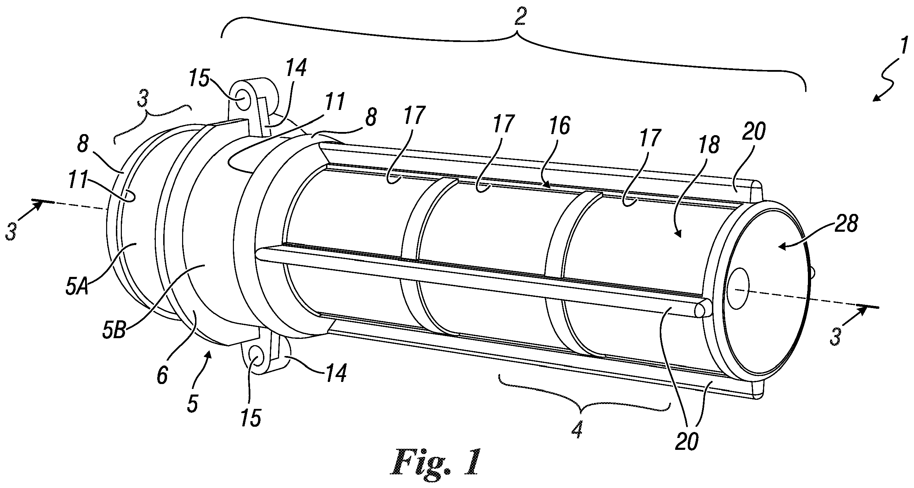

Initially with reference to figures 1-3, the filtering element is generally indicated with 1. It comprises a hollow tubular body 2 having a first portion 3 from which a second portion 4 protrudes. The first portion 3, which will be indicated hereinafter as constraint portion 3, comprises a hollow tubular body 5, which may also be stiff, peripherally closed and having a radial outer collar 6 which separates such tubular body into two cylindrical connection parts 5A, 5B each with a terminal conical end 8 protruding from the corresponding cylindrical part. Between a base of each conical end 8 and the respective cylindrical connection part 5A, 5B there is therefore created a step 11.

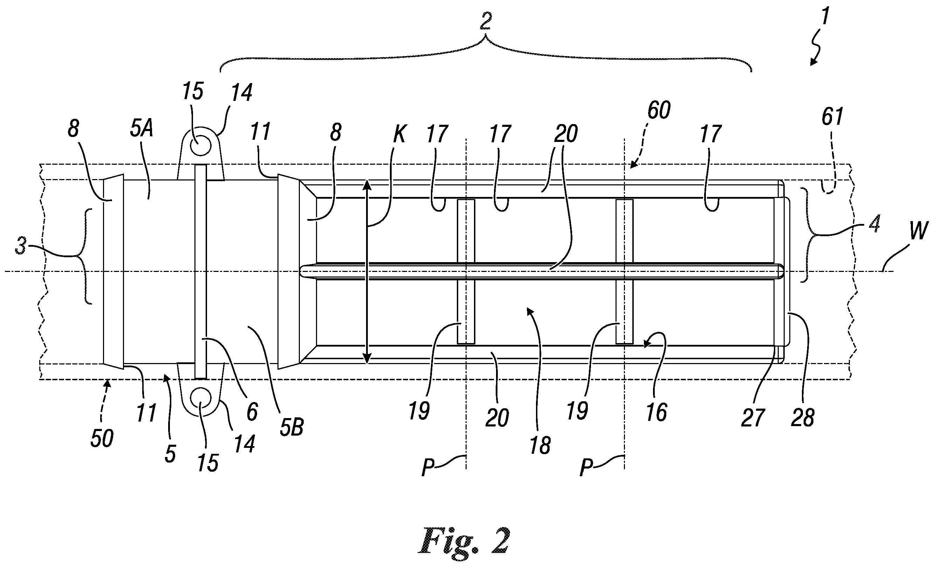

On the hollow tubular (stiff) body 5 there are present projections 14 provided with through holes 15 and arranged in a diametrically opposite position with respect to each other. Such protrusions 14 are used to fix the filtering element 1 to an appropriate support, for example to ducts 50 and 60 (figure 2) of a battery cooling system (not shown) used in the field of motor vehicles with electric motor, batteries which can for example be with lithium, in solid state or be defined by fuel cells for hydrogen-powered vehicles. Such use of a system for cooling batteries in the automotive industry is provided purely by way of non-limiting example, the filtering element being suitable to be used also in other air conditioning systems (for heating or cooling) .

The second portion 4, which hereinafter will be referred to as filtering portion 4, is hollow and tubular; it comprises a hollow tubular body 16, which may be stiff and preferably cylindrical, provided with longitudinal openings (that is distributed longitudinally thereon) 17 and obtained around a filtering member 18. The tubular body 16 substantially extends from the part 5B of the first portion 3 mentioned above and it comprises circumferential ribs 19 (that is lying on planes P orthogonal to a longitudinal axis W of the filtering portion 4 coincident with the longitudinal axis of the entire filtering element 1) connected to longitudinal ribs 20 (parallel to the axis W mentioned above) protruding from said circumferential ribs 19. Such longitudinal ribs 20, made as a single piece with the part 5B and therefore the portion 3, in any case define a cross-section with constant diameter K (figure 2) along the entire filtering portion 4 (that is along the axis W thereof), irrespective of the fact that the body 16 is cylindrical (with constant cross-section) or conical (therefore with variable section).

The circumferential ribs have the function of protecting, supporting and stiffening the filtering member 18, while the longitudinal ribs 20 have the dual function of ensuring the resistance (both to the bending and to the torsion) of the filtering element 1, allowing the handling thereof and the introduction thereof in one (60) of the ducts (50, 60) of the cooling system; the ribs allow to avoid any collapse of such duct 60 of the filtering member 18, so as to ensure appropriate outflow volumes of the filtered fluid. Advantageously, such longitudinal ribs 20 touch the inner wall 61 of the duct 60 so as to directly cooperating with the latter therefore acting as an element for spacing the duct from the filtering member 18 and as an element for supporting the filtering portion 4 in the duct 60.

In the meantime, the distance created by said longitudinal ribs 20 between the inner wall 61 of the duct 60 and the filtering member 18 present at the openings 17, allows to define a through-flow between such filtering member and said inner wall. Therefore, when - in the filtering element 1 - there circulates a fluid for cooling the cooling system where the filtering element 1 is mounted, such (filtered ) fluid may flow out from the openings 17 and flow outside the filtering portion 4, therealong and along the wall 61 of the duct 60.

The ducts 50 and 60 are fitted on the cylindrical connection parts 5A e 5B also thanks to the conical ends 8 thereof which are tapered towards the internal of each duct, and this facilitates the superimposition of said ducts 50 and 60 on said connection parts.

The ducts 50 and 60 are fitted onto the cylindrical connection parts 5A and 5B until they touch the collar 6 which therefore acts as depth reference for the correct fitting of the ducts.

Obviously, the connection between the ducts 50 and 60 and the cylindrical connection parts 5A and 5B may be carried out in any known manner and not solely by interference on said parts 5A and 5B (for example with the use of elements, such as clamps, for fastening such ducts on said connection parts) .

The stiff bodies 5 and 16 of the portions 3 and 4 form a single body, without interruption. Such body is obtained using plastic material by moulding. The filtering member is co-moulded (that is moulded in the same mould) with the portions 3 and 4 and therefore the latter embed the filtering member 18. In particular, the portions 3 and 4 are moulded on the filtering member 18 when the (plastic) material which defines such member has just been moulded so as to be physically bound to the filtering member and create a single element or body therewith.

Alternatively, the filtering member 18 is obtained by moulding simultaneously with the creation of the body (16) and therefore directly during the moulding of the portions 3 and 4 of the body 2 of the filtering element. Therefore, even in this case, such body 2 is made of a single piece and, in this case, also as a single component: the filtering member 18 is part of the portion 4 and of the stiff body 16 thereof.

However, both in the case where the body 2 is obtained by co-moulding the filtering member 18 and the portions 3 and 4 which, even more so, in the case where such body is obtained through a single moulding operation, the filtering element 1 is made as a single piece and the parts which define it form a single piece together.

The filtering element 1 is open at an end 26 thereof at the cylindrical connection part 5A of the constraint portion 3. The filtering portion 4 has an end 27 distant from the constraint portion and which, in the embodiment of figures 1-3, is closed by a closing part 28.

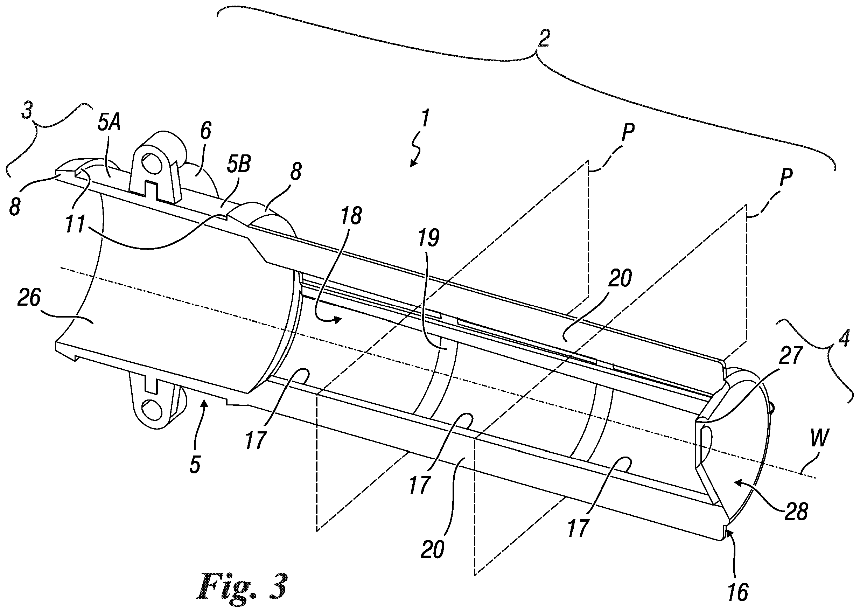

In order to avoid fluid stagnation and optimise the filtering and flow efficiency in the cooling system where the filtering element 1 is arranged, the closing part 28 is conical or frustoconical-shaped (like in figures) facing towards the constraint portion 3 (see figure 3). In this manner, such closing part 28 contributes to the outflow of the cooling fluid circulating in the cooling system from the portion 4 given that such fluid is directed towards the openings 17 and there is no stagnation in the filtering element at said closing element 28.

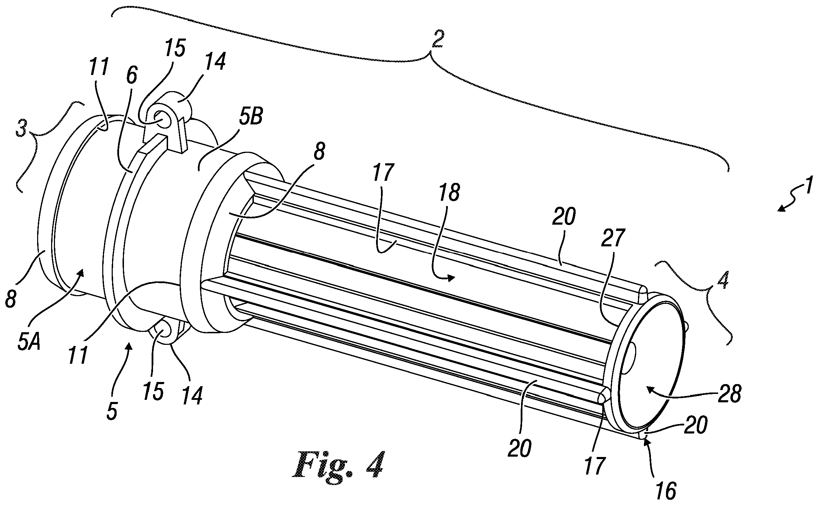

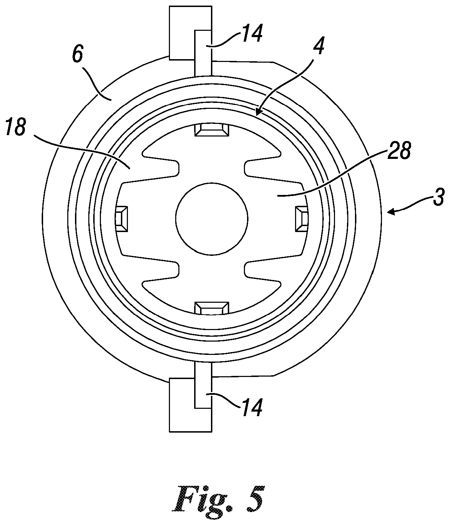

Figures 4 and 5 show a first variant of the invention. In these figures, parts corresponding to those of the figures already described previously are indicated using the same reference numerals.

The solution in question differs from that of figures 1-3 due to the fact that the filtering member 18 is not flat (like in figures 1-4), but it is of the pleated type, that is corrugated. This increases the filtering surface of the filtering element 1, without increasing the overall dimensions of the filter.

Also in the case of figures 4 and 5, the filtering member 18 forms a single element with the stiff body 16 of the filtering portion 4 (and with the stiff body 5 of the constraint portion 3 made as a single piece with the one 16 mentioned above). Preferably, such filtering member is co-moulded with such body 16, as described above.

In the figures in question, the stiff body 16 comprises only the longitudinal ribs 20 which protrude from the filtering member 18, given that circumferential ribs 19 are not provided for. The windows 17 (for the through-flow of the filtered fluid) are therefore larger than those of the solution of figure 1.

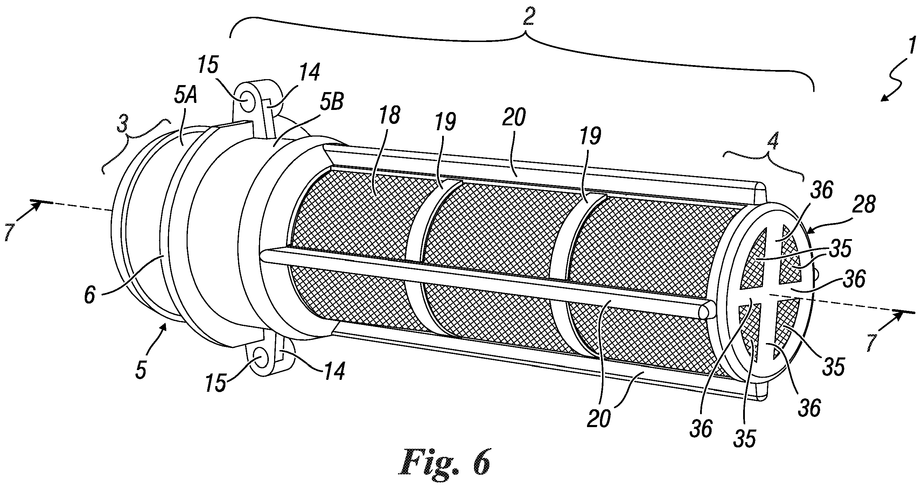

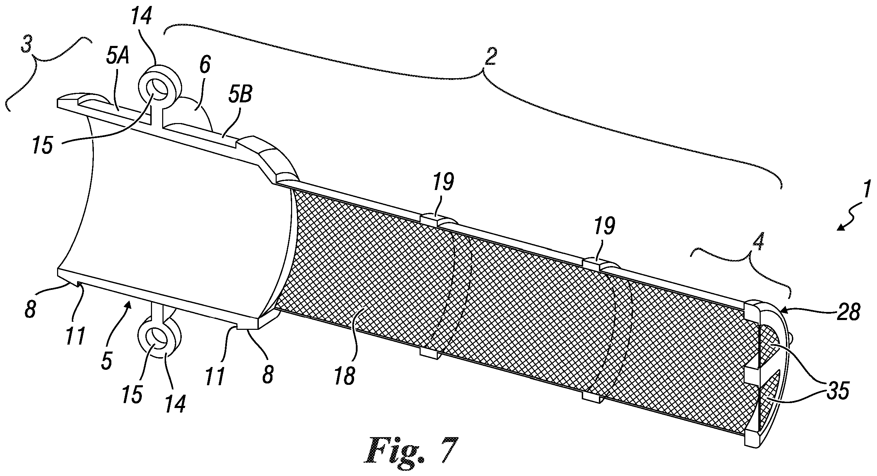

Figures 6 and 7 show another variant of the invention. Also in this case, parts corresponding to those of the figures already described previously are defined by the same reference numerals.

In the solution in question, the closing element 28 (still part of the body 16 like the closing element of the figures already described above) is cross-shaped and it has openings 35 between stiff arms 36. Such closing element is internally lined by the filtering member 18 (flat) and therefore it contributes to the filtration of the cooling fluid in the longitudinal direction of the filtering element 1. Such filtering member 18 is made as a single piece with the stiff bodies 5 and 16 like in the solutions described above.

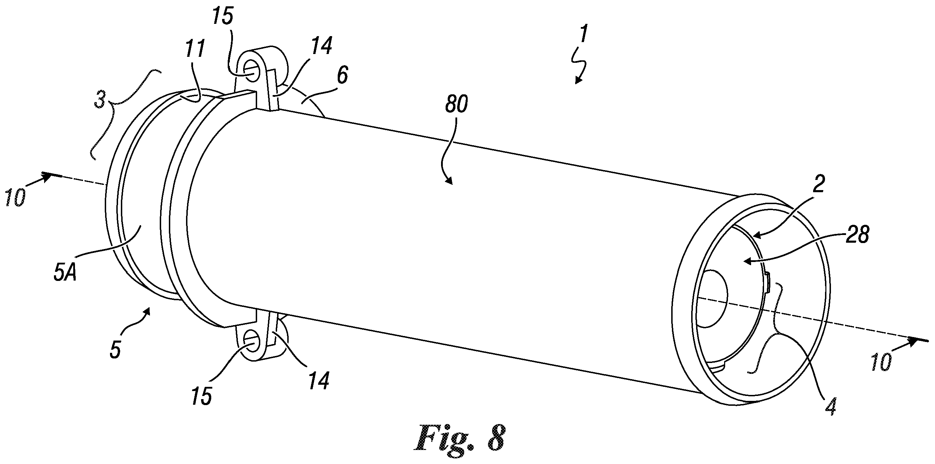

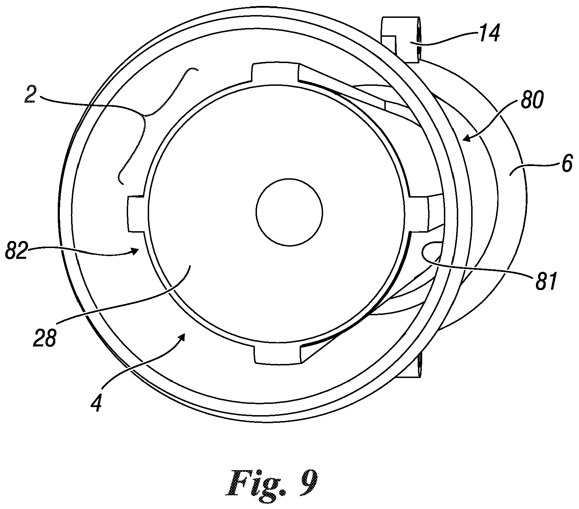

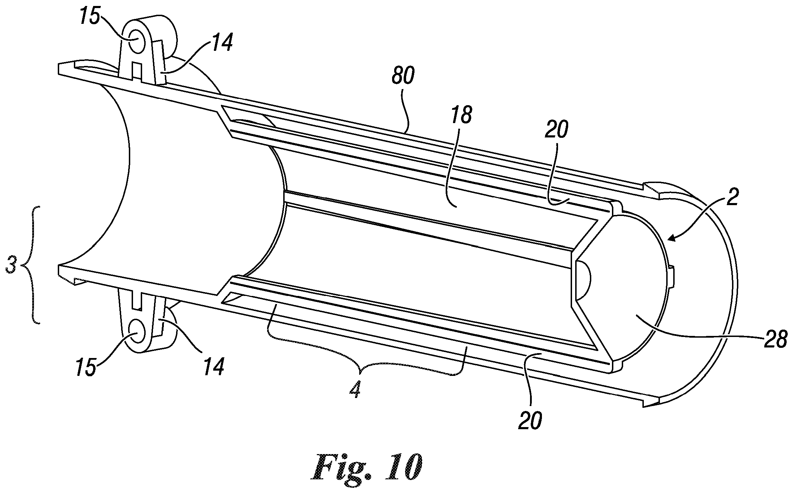

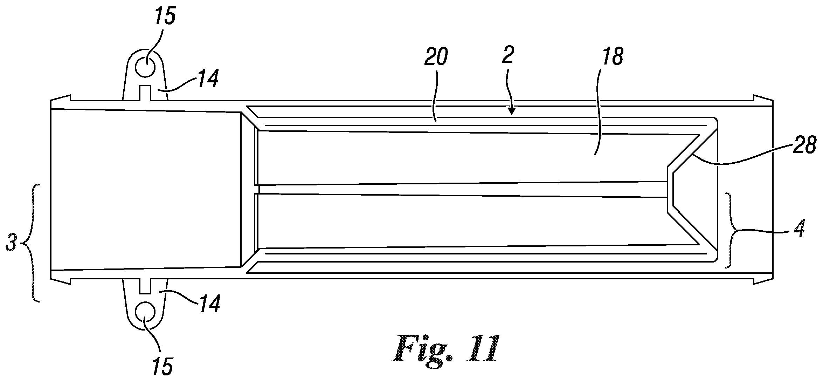

Figures 8-11 show a further variant of the invention. In such figures, parts corresponding to those of the figures described previously are indicated using the same reference numbers.

In the solution in question, the filtering element 1 comprises the hollow tubular body 2 (provided with a filtering part 4) inserted into an (outer) tubular element 80. The outer tubular element 80 is made as a single piece with the first portion 3 of the tubular body 2 of the filtering element and it has an inner wall 81 arranged spaced apart from the filtering member 18 and from the ribs 20 so as to create, between the tubular body 2 and the outer tubular element 80, an annular cavity 82 to which the fluid is supplied after passing through the filtering element 18.

The outer tubular element 80, coaxial to the hollow tubular body 2, houses and protects such body 2; basically, the tubular element, is an extension of the portion 3 around such tubular body 2. Such tubular element 80 is equivalent to the connection part 5B of the body 5 described above(for example relating to figures 1-3) and the duct 60 (not shown in figures 8-11) may be fitted on the tubular element 80 similarly to what happens with such connection part 5B.

The invention allows to obtain a filtering element 1 with a filtering surface larger than the portion 4 which may be inserted into the ducts 50 and 60 of a battery cooling system, in particular (but not exclusively or necessarily) for vehicles, without the need for any outer casing for containing it. The filtering element 1 is directly inserted into one of the ducts mentioned above and, in particular, the filtering portion 4 thereof is shaped so as to prevent the duct 60 in which the filtering member is inserted from collapsing and maintain - between the latter and the inner part of the duct - a space for the circulation of the fluid during filtration.

All this without the need for lining such filtering portion using an outer casing which houses it.

The filtering member is shaped to form a mesh or in any case it is such to allow the through-flow of the cooling fluid therein.

However, other solutions may be provided in the light of the description above with the characteristics of the invention as described by the claims that follow.

## Claims

1. Filtering element adapted to be used in a fluid recirculation system for an air conditioning system such as a system for cooling a battery assembly, such filtering element (1) comprising a hollow tubular body (2) having a hollow tubular end portion (3) connected to a filtering portion (4), the latter having a hollow tubular body (16) with which there is associated a filtering member (18), the hollow end portion (3) and the tubular body (16) of the filtering portion (4) being connected to each other without interruption, the filtering member (18) forming a single body with said hollow end portion (3) and said hollow tubular body (16), **characterised in that** said hollow tubular end portion(3) comprises a tubular stiff body (5) having a radial outer collar (6) which partitions such tubular stiff body into two parts (5A, 5B) adapted to directly cooperate with ducts (50, 60) of said cooling system.

2. Filtering element according to claim 1, **characterised in that** said parts (5A, 5B) of the tubular stiff body (5) mentioned above terminate with terminal conical ends (8) defining a step (11) with the respective part (5A, 5B), the hollow tubular body (16) of the filtering portion (4) protruding from one (5B) of such parts.

3. Filtering element according to claim 1, **characterised in that** said tubular body (5) of the hollow tubular end portion (3) has protrusions (14) which are drilled (in 15).

4. Filtering element according to claim 1, **characterised in that** the hollow tubular body (16) of the filtering portion comprises protruding longitudinal ribs (20) made as a single piece with the hollow tubular end portion (3) mentioned above and arranged around said filtering member (18), said longitudinal ribs (20) defining, in cross-section, a maximum diameter of the filtering portion (4).

5. Filtering element according to claim 4, **characterised in that** said protruding longitudinal ribs (20) define, in cross-section, a maximum diameter of the filtering portion (4) which is constant on each cross-sectional plane orthogonal to a longitudinal axis (W) of the filtering portion and along such longitudinal axis.

6. Filtering element according to claim 1, **characterised in that** said filtering member (18) is co-moulded with the end portion (3) and with the hollow tubular body (16) of the filtering portion (4).

7. Filtering element according to claim 1, **characterised in that** said filtering member (18) is part of the hollow tubular body (16) of the filtering portion (4), said filtering member (18) being obtained simultaneously during the moulding of said hollow tubular body (16), the body (2) of the filtering element being a moulded single component.

8. Filtering element according to claim 1, **characterised in that** said filtering member (18) has a vacant surface arranged at longitudinal openings (17) of the hollow tubular body (16).

9. Filtering element according to claim 1, **characterised in that** said hollow tubular body (16) of the filtering portion (4) comprises circumferential ribs (19) arranged above the filtering member (18).

10. Filtering element according to claim 1, **characterised in that** said hollow tubular body (16) of the filtering portion (4) has an end (27) distant from the hollow tubular end portion (3) and comprising a closing part (28) at least frustoconical-shaped and facing towards the hollow tubular end portion (3) mentioned above.

11. Filtering element according to claim 1, **characterised in that** said hollow tubular body (16) of the filtering portion (4) has an end (27) distant from the hollow tubular end portion (3) and cross-shaped, said end (27) having openings (35) and stiff arms (36), the filtering member being integrally joined with said end (27).

12. Element according to claim 1, **characterised in that** said filtering member is pleated.

13. Filtering element according to claim 1, **characterised in that** the hollow tubular end portion (3) comprises a tubular element (80) which is externally superimposed around the filtering portion (4), between said filtering portion (4) and an inner wall (81) of such tubular element (80) there being present an annular cavity (82) adapted to receive the filtered fluid which is passed through the filtering portion (4), said tubular element (80) superimposed to the filtering portion (4) directly cooperating with a duct of said cooling system.

14. Filtering element according to claim 1, **characterised in that** said hollow tubular body (16) of the filtering portion (4) is alternatively cylindrical or with variable cross-section along a longitudinal axis (W) thereof.

## Patentansprüche

1. Filterelement, das angepasst ist, um in einem Fluidumlaufsystem für eine Klimaanlage, wie beispielsweise einem System zum Kühlen einer Batterieanordnung, verwendet zu werden, ein solches Filterelement (1) umfassend einen hohlen, rohrförmigen Körper (2), der einen hohlen, rohrförmigen Endabschnitt (3) aufweist, der mit einem Filterabschnitt (4) verbunden ist, wobei letzterer einen hohlen, rohrförmigen Körper (16) aufweist, mit dem ein Filterorgan (18) assoziiert ist, der hohle Endabschnitt (3) und der rohrförmige Körper (16) des Filterabschnitts (4) ohne Unterbrechung miteinander verbunden sind, das Filterorgan (18) einen einzigen Körper mit dem hohlen Endabschnitt (3) und dem hohlen rohrförmigen Körper (16) bildet, **dadurch gekennzeichnet, dass** der hohle, rohrförmige Endabschnitt (3) einen rohrförmigen, starren Körper (5) umfasst, der einen radialen äußeren Bund (6) aufweist, der diesen rohrförmigen, starren Körper in zwei Teile (5A, 5B) unterteilt, die angepasst sind, um direkt mit Kanälen (50, 60) des Kühlsystems zusammenzuwirken.

2. Filterelement nach Anspruch 1, **dadurch gekennzeichnet, dass** die Teile (5A, 5B) des oben erwähnten rohrförmigen, starren Körpers (5) mit abschließenden, konischen Enden (8) enden, die mit dem jeweiligen Teil (5A, 5B) eine Stufe (11) bilden, der hohle, rohrförmige Körper (16) des Filterabschnitts (4) aus einem (5B) dieser Teile hervorsteht.

3. Filterelement nach Anspruch 1, **dadurch gekennzeichnet, dass** der rohrförmige Körper (5) des hohlen, rohrförmigen Endabschnitts (3) Vorsprünge (14) aufweist, die gebohrt sind (in 15).

4. Filterelement nach Anspruch 1, **dadurch gekennzeichnet, dass** der hohle, rohrförmige Körper (16) des Filterabschnitts hervorstehende Längsrippen (20) umfasst, die einstückig mit dem oben erwähnten hohlen, rohrförmigen Endabschnitt (3) gefertigt und um das Filterorgan (18) herum angeordnet sind, wobei die Längsrippen (20) im Querschnitt einen maximalen Durchmesser des Filterabschnitts (4) definieren.

5. Filterelement nach Anspruch 4, **dadurch gekennzeichnet, dass** die vorstehenden Längsrippen (20) im Querschnitt einen maximalen Durchmesser des Filterabschnitts (4) definieren, der in jeder Querschnittsebene senkrecht zu der Längsachse (W) des Filterabschnitts und entlang dieser Längsachse konstant ist.

6. Filterelement nach Anspruch 1, **dadurch gekennzeichnet, dass** das Filterorgan (18) zusammen mit dem Endabschnitt (3) und mit dem hohlen, rohrförmigen Körper (16) des Filterabschnitts (4) geformt ist.

7. Filterelement nach Anspruch 1, **dadurch gekennzeichnet, dass** das Filterorgan (18) Teil des hohlen, rohrförmigen Körpers (16) des Filterabschnitts (4) ist, wobei das Filterorgan (18) gleichzeitig während des Formens des genannten hohlen, rohrförmigen Körpers (16) erlangt wird, der Körper (2) des Filterelements eine geformte einzige Komponente ist.

8. Filterelement nach Anspruch 1, **dadurch gekennzeichnet, dass** das Filterorgan (18) eine freie Fläche aufweist, die an Längsöffnungen (17) des hohlen, rohrförmigen Körpers (16) angeordnet ist.

9. Filterelement nach Anspruch 1, **dadurch gekennzeichnet, dass** der hohle, rohrförmige Körper (16) des Filterabschnitts (4) Umfangsrippen (19) umfasst, die oberhalb des Filterorgans (18) angeordnet sind.

10. Filterelement nach Anspruch 1, **dadurch gekennzeichnet, dass** der hohle, rohrförmige Körper (16) des Filterabschnitts (4) ein von dem hohlen, rohrförmigen Endabschnitt (3) entferntes Ende (27) aufweist und ein zumindest kegelstumpfförmiges Verschlussteil (28) umfasst und dem oben erwähnten hohlen, rohrförmigen Endabschnitt (3) zugewandt ist.

11. Filterelement nach Anspruch 1, **dadurch gekennzeichnet, dass** der hohle, röhrenförmige Körper (16) des Filterabschnitts (4) ein kreuzförmiges Ende (27) aufweist, das von dem hohlen, rohrförmigen Endabschnitt (3) entfernt ist, wobei das Ende (27) Öffnungen (35) und starre Arme (36) aufweist, wobei das Filterelement einstückig mit dem genannten Ende (27) verbunden ist.

12. Element nach Anspruch 1, **dadurch gekennzeichnet, dass** das Filterelement gefaltet ist.

13. Filterelement nach Anspruch 1, **dadurch gekennzeichnet, dass** der hohle, rohrförmige Endabschnitt (3) ein rohrförmiges Element (80) umfasst, das außen um den Filterabschnitt (4) herum überlagert ist, wobei zwischen dem Filterabschnitt (4) und einer Innenwand (81) eines solchen rohrförmigen Elements (80) ein ringförmiger Hohlraum (82) vorhanden ist, der angepasst ist, um das gefilterte Fluid zu erhalten, das durch den Filterabschnitt (4) verlaufen ist, wobei das rohrförmige Element (80), das den Filterabschnitt (4) überlagert, direkt mit einem Kanal des Kühlsystems zusammenwirkt.

14. Filterelement nach Anspruch 1, **dadurch gekennzeichnet, dass** der hohle, rohrförmige Körper (16) des Filterabschnitts (4) entweder zylindrisch oder entlang einer Längsachse (W) davon mit einem variablen Querschnitt ist.

## Revendications

1. Élément filtrant adapté pour être utilisé dans un système de recirculation de fluide destiné à un système de climatisation, tel qu'un système de refroidissement d'un ensemble de batteries, ledit élément filtrant (1) comprenant un corps tubulaire creux (2) comportant une partie d'extrémité tubulaire creuse (3) reliée à une partie filtrante (4), cette dernière comportant un corps tubulaire creux (16) auquel est associé un organe filtrant (18), la partie d'extrémité creuse (3) et le corps tubulaire (16) de la partie filtrante (4) étant raccordés l'un à l'autre sans interruption, l'organe filtrant (18) formant un corps unique avec ladite partie d'extrémité creuse (3) et ledit corps tubulaire creux (16), **caractérisé en ce que** ladite partie d'extrémité tubulaire creuse (3) comprend un corps tubulaire rigide (5) comportant un collet radial extérieur (6) qui divise ce corps tubulaire rigide en deux parties (5A, 5B) adaptées pour coopérer directement avec des conduits (50, 60) dudit système de refroidissement.

2. Élément filtrant selon la revendication 1, **caractérisé en ce que** lesdites parties (5A, 5B) du corps tubulaire rigide (5) mentionné ci-dessus se terminent par des extrémités coniques (8) définissant un épaulement (11) avec la partie respective (5A, 5B), le corps tubulaire creux (16) de la partie filtrante (4) faisant saillie à partir de l'une (5B) de ces parties.

3. Élément filtrant selon la revendication 1, **caractérisé en ce que** ledit corps tubulaire (5) de la partie d'extrémité tubulaire creuse (3) comporte des saillies (14) qui sont percées (en 15).

4. Élément filtrant selon la revendication 1, **caractérisé en ce que** le corps tubulaire creux (16) de la partie filtrante comprend des nervures longitudinales saillantes (20) formées d'un seul tenant avec la partie d'extrémité tubulaire creuse (3) mentionnée ci-dessus et disposées autour dudit organe filtrant (18), lesdites nervures longitudinales (20) définissant, en section transversale, un diamètre maximal de la partie filtrante (4).

5. Élément filtrant selon la revendication 4, **caractérisé en ce que** lesdites nervures longitudinales saillantes (20) définissent, en section transversale, un diamètre maximal de la partie filtrante (4) qui est constant sur chaque plan transversal orthogonal à un axe longitudinal (W) de la partie filtrante et le long de cet axe longitudinal.

6. Élément filtrant selon la revendication 1, **caractérisé en ce que** ledit organe filtrant (18) est moulé d'un seul tenant avec la partie d'extrémité (3) et avec le corps tubulaire creux (16) de la partie filtrante (4).

7. Élément filtrant selon la revendication 1, **caractérisé en ce que** ledit organe filtrant (18) fait partie intégrante du corps tubulaire creux (16) de la partie filtrante (4), ledit organe filtrant (18) étant obtenu simultanément lors du moulage dudit corps tubulaire creux (16), le corps (2) de l'élément filtrant constituant une pièce moulée d'un seul tenant.

8. Élément filtrant selon la revendication 1, **caractérisé en ce que** ledit organe filtrant (18) présente une surface libre disposée au niveau des ouvertures longitudinales (17) du corps tubulaire creux (16).

9. Élément filtrant selon la revendication 1, **caractérisé en ce que** ledit corps tubulaire creux (16) de la partie filtrante (4) comporte des nervures circonférentielles (19) disposées au-dessus de l'organe filtrant (18).

10. Élément filtrant selon la revendication 1, **caractérisé en ce que** ledit corps tubulaire creux (16) de la partie filtrante (4) présente une extrémité (27) éloignée de la partie d'extrémité tubulaire creuse (3) et comportant une partie de fermeture (28) de forme au moins tronconique et tournée vers la partie d'extrémité tubulaire creuse (3) mentionnée ci-dessus.

11. Élément filtrant selon la revendication 1, **caractérisé en ce que** ledit corps tubulaire creux (16) de la partie filtrante (4) comporte une extrémité (27) éloignée de la partie d'extrémité tubulaire creuse (3) et en forme de croix, ladite extrémité (27) comportant des ouvertures (35) et des bras rigides (36), l'élément filtrant étant solidaire de ladite extrémité (27).

12. Élément selon la revendication 1, **caractérisé en ce que** ledit élément filtrant est plissé.

13. Élément filtrant selon la revendication 1, **caractérisé en ce que** la partie d'extrémité tubulaire creuse (3) comprend un élément tubulaire (80) qui est superposé à l'extérieur autour de la partie filtrante (4), une cavité annulaire (82) étant présente entre ladite partie filtrante (4) et une paroi interne (81) dudit élément tubulaire (80), cette cavité étant adaptée pour recevoir le fluide filtré qui a traversé la partie filtrante (4), ledit élément tubulaire (80) superposé à la partie filtrante (4) coopérant directement avec un conduit dudit système de refroidissement.

14. Élément filtrant selon la revendication 1, **caractérisé en ce que** ledit corps tubulaire creux (16) de la partie filtrante (4) est soit cylindrique, soit de section transversale variable le long de son axe longitudinal (W).
